Europäisches Patentamt

European Patent Office

Office européen des brevets

(11) Numéro de publication : **0 197 804**
**B1**

(12) FASCICULE DE BREVET EUROPÉEN

(45) Date de publication du fascicule du brevet :
19.10.88

(51) Int. Cl.⁴ : **F 16 J 15/02, F 16 H 57/04,**
**F 16 L 27/10, F 02 F 7/00**

(21) Numéro de dépôt : 86400353.8

(22) Date de dépôt : 19.02.86

(54) **Joint d'étanchéité entre deux carters reliés par deux orifices susceptibles d'être décalés axialement et/ou radialement.**

(30) Priorité : 27.02.85 FR 8502856

(43) Date de publication de la demande :
15.10.86 Bulletin 86/42

(45) Mention de la délivrance du brevet :
19.10.88 Bulletin 88/42

(84) Etats contractants désignés :
DE GB IT

(56) Documents cités :
FR-A- 2 271 465

(73) Titulaire : COMPAGNIE DES TRANSMISSIONS MECA-
NIQUES SEDIS
Tour Avenir Ouest 64, Rue du 8 Mai 1945
F-92025 Nanterre Cedex (FR)

SACHS-HURET S.A.
60, Avenue Félix Faure
F-92000 Nanterre (FR)

(72) Inventeur : Sosson, Pierre
2 rue Laffitte
F-78600 Maisons-Laffitte (FR)

(74) Mandataire : Polus, Camille et al
c/o Cabinet Lavoix 2, Place d'Estienne d'Orves
F-75441 Paris Cedex 09 (FR)

EP 0 197 804 B1

## Description

La présente invention a pour objet un joint d'étanchéité entre deux carters reliés par deux orifices susceptibles d'être décalés axialement et/ou radialement.

Ces deux carters peuvent être jointifs ou non jointifs, leurs deux orifices pouvant avoir des diamètres différents ou identiques et pouvant présenter un désaxage dans les deux plans vertical et horizontal, ou bien être parfaitement alignés dans ces deux plans. Les axes des orifices peuvent aussi ne pas être parallèles, et la distance qui sépare les deux faces extérieures des carters au droit des orifices peut être nulle ou relativement importante.

En d'autres termes, les deux orifices peuvent ne pas être exactement en regard l'un de l'autre, et présenter un décalage dans le sens radial et/ou un décalage angulaire entre leurs deux axes, la distance axiale entre les deux orifices pouvant en outre varier.

Du document FR-A-22 71 465 est connu un joint d'étanchéité pour les feux montés sur les parois extérieures des caravanes comprenant un tube en élastomère emmanché sur un bossage.

Cette situation se rencontre également par exemple entre deux orifices de communication entre un bloc moteur et un boîtier de distribution rapporté sur l'une des faces de ce moteur comme décrit dans la demande de brevet FR-A-25 45 193 (EP-A-12 44 33) au nom de la Demanderesse. L'huile de lubrification du moteur peut pénétrer dans le boîtier par les deux orifices, tandis que l'étanchéité vis-à-vis de l'extérieur doit être assurée.

Les joints mis en œuvre jusqu'à présent pour assurer l'étanchéité entre ces deux orifices vis-à-vis de l'extérieur peuvent s'avérer inefficaces lorsque la distance entre les deux orifices est importante ou que le décalage dans le sens radial présente une valeur importante, par exemple 0,5 à 1 mm.

L'invention a donc pour but de proposer un joint d'étanchéité du type ci-dessus, agencé de façon à empêcher toute fuite entre les deux carters vis-à-vis de l'extérieur au niveau de la communication entre les deux orifices des carters, malgré des différences relatives de position des axes desdits orifices.

Suivant l'invention, le joint d'étanchéité comprend deux armatures dont la première est pourvue d'une garniture en matière élastique destinée à venir en compression axiale sur l'un des carters afin d'assurer l'étanchéité dans le sens axial, tandis que la seconde armature est munie d'une garniture en matière élastique destinée à venir en appui sur une surface du second carter et travaillant en compression radiale, et les deux armatures sont solidarisées ensemble par une jonction élastique assurant l'étanchéité entre les armatures, travaillant en compression radiale et/ou en cisaillement axial.

On constate que le joint ainsi réalisé permet de rattraper des décalages relativement importants entre les deux orifices à relier tout en garantissant une étanchéité satisfaisante vis-à-vis de l'extérieur. A titre d'exemple numérique, toute fuite de lubrifiant est empêchée pour des décalages angulaires pouvant atteindre environ 5°, et pour des décalages radiaux atteignant environ 1 mm, ce qui n'était pas possible avec les joints connus.

Suivant un mode de réalisation avantageux de l'invention, la première armature porte une garniture travaillant également en compression radiale et réalisée de préférence d'une seule pièce avec la jonction élastique et la seconde garniture, entre lesquelles la seconde armature est noyée.

D'autres particularités et avantages de l'invention apparaîtront au cours de la description qui va suivre, faite en référence aux dessins annexés qui en illustrent deux formes de réalisation à titre d'exemples non limitatifs :

— la Figure 1 est une vue en coupe axiale partielle des faces en regard de deux carters percés d'orifices qui doivent être reliés de manière étanche vis-à-vis de l'extérieur pour assurer le passage d'un liquide lubrifiant ;

— la Figure 2 est une vue en coupe axiale d'un premier mode de réalisation du joint d'étanchéité selon l'invention, représenté monté en regard de deux orifices de communication entre deux carters contigus ;

— la Figure 3 est une vue en coupe axiale analogue à la Figure 2 d'un second mode de réalisation du joint selon l'invention.

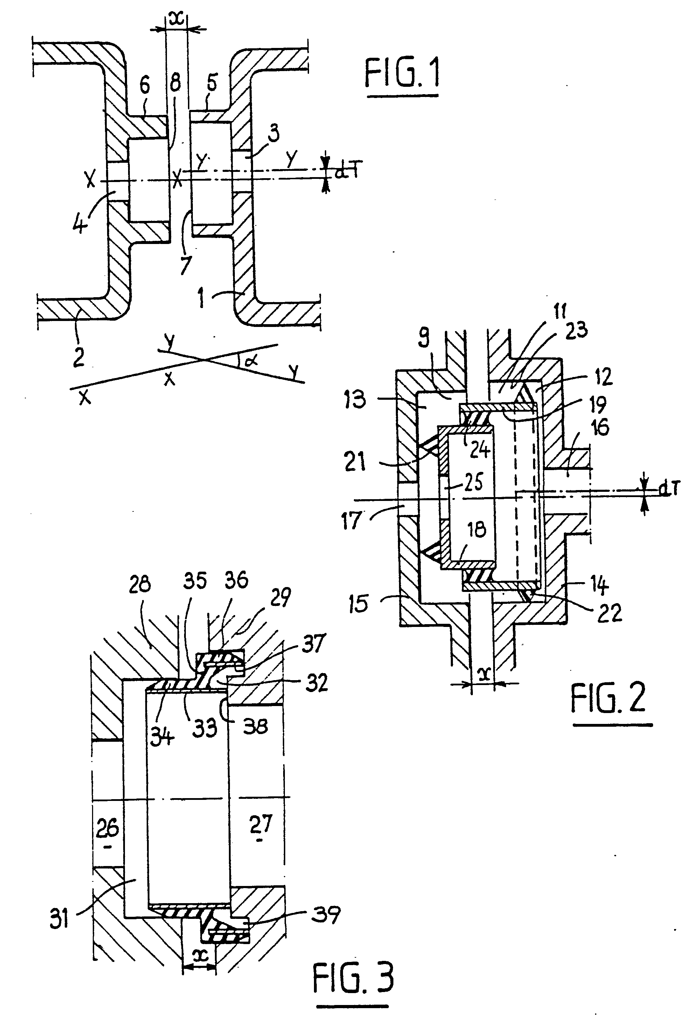

En se reportant à la Figure 1, on voit partiellement deux carters 1, 2 contigus, percés chacun d'une ouverture 3, 4 qui débouche dans une collerette 5, 6 délimitant une ouverture respective 7, 8, ces deux ouvertures étant distantes d'un intervalle axial x. Les axes X-X et Y-Y, d'une part de l'ouverture 4 et de l'orifice 8, et d'autre part de l'ouverture 3 et de l'orifice 7 peuvent être confondus, ou bien décalés d'un intervalle dT dans les deux plans vertical et horizontal ou dans l'un de ces deux plans seulement, tout en restant parallèles. Ils peuvent également ne pas être parallèles, et présenter alors un décalage angulaire α, et la distance x entre les orifices 7 et 8 peut varier de dx.

Les carters 1, 2 peuvent être par exemple respectivement celui d'un bloc moteur et d'un boîtier de distribution rapportés sur une face terminale de ce moteur, le problème étant d'assurer la circulation de l'huile de lubrification entre ces deux carters par les ouvertures 7, 8 de manière étanche vis-à-vis de l'extérieur, et ce malgré les désaxages et décalages possibles mentionnés ci-dessus, qui peuvent être plus ou moins importants.

Le premier mode de réalisation du joint selon l'invention, illustré à la Figure 2, est destiné à assurer l'étanchéité entre deux orifices 9, 11 d'embrèvements 12, 13 formés respectivement dans des carters 14, 15, dont les fonds sont percés d'ouvertures 16, 17, les bords des ouvertures 9, 11 étant séparés par un intervalle x.

Le joint comprend deux armatures 18, 19, de préférence métalliques, dont la première 18 est pourvue d'une garniture 21 en matière élastique destinée à venir en compression axiale sur le fond de l'embrèvement 13 du carter 15 afin d'assurer l'étanchéité dans le sens axial, tandis que la seconde armature 19 est munie d'une garniture 22 en matière élastique destinée à venir en appui sur la paroi cylindrique 23 de l'orifice 11 du second carter 14 et travaillant en compression radiale. Les deux armatures 18, 19 sont solidarisées ensemble par une jonction élastique 24 assurant l'étanchéité entre les armatures 18, 19, travaillant en compression radiale et/ou en cisaillement axial.

Les garnitures 21, 22 et la jonction 24 sont adhérisées sur les armatures 18, 19 par surmoulage sur celles-ci et formées de préférence en élastomère, par exemple du caoutchouc. Les garnitures 21, 22 sont du type à lèvre, à section sensiblement triangulaire.

La garniture 21 étant en appui sur le fond de l'embrèvement 13 de l'orifice 9 du carter 15, assure donc l'étanchéité dans un plan perpendiculaire à l'axe de communication entre les deux carters 14, 15, tandis que la seconde garniture 22 est en appui radial sur une surface coaxiale à l'axe des orifices 16, 17. Dans cet exemple, la première armature 18 est constituée par une cuvette dont le fond est percé d'une ouverture 25 de passage du lubrifiant entre les orifices 16, 17 et sensiblement coaxiale à ceux-ci. La seconde armature 19 est formée par une bague dans laquelle la cuvette 18 est engagée, et qui est solidarisée avec celle-ci par la jonction élastomérique 24 constituant un bourrelet annulaire élastique autorisant un débattement des armatures 18, 19 dans toutes les directions.

La présence de la jonction élastique 24 augmente considérablement les possibilités de rattrapage par le joint des amplitudes des décalages entre les orifices 16, 17, tout en maintenant une excellente étanchéité.

Dans le second mode de réalisation du joint illustré à la Figure 3, celui-ci assure l'étanchéité du passage du lubrifiant entre deux ouvertures 26, 27 pratiquées dans des carters respectifs 28, 29 et qui débouchent dans des embrèvements délimitant des ouvertures 31, 32 séparées par l'intervalle x.

Le joint comporte ici une première armature 33, formée par exemple par une douille cylindrique qui porte une garniture 34 travaillant en compression axiale. La garniture 34 est de préférence réalisée d'une seule pièce avec la jonction élastique 35 entre la garniture 34 et la seconde garniture 36, la seconde armature 37 étant noyée entre la garniture 36 et la jonction élastique 35.

La douille 33 est en appui contre une collerette 38 délimitant l'ouverture 27, tandis que la bague 37 est en contact avec le fond d'une gorge 39 de l'embrèvement du carter 29.

Les variations de l'intervalle axial x sont ici absorbées non par compression d'une garniture élastique, mais par une plus ou moins grande pénétration de la garniture 34 dans l'embrèvement de l'ouverture 31. La garniture 34 en appui sur la paroi cylindrique délimitant l'ouverture 31 travaille à la fois en compression axiale et en compression radiale, tandis que la garniture 36 travaille uniquement en compression radiale. La jonction en élastomère 35 travaille comme dans la réalisation précédente, en compression radiale et/ou en cisaillement axial.

Dans ce mode de réalisation comme dans le précédent, le joint permet de maintenir une excellente étanchéité entre les deux carters pour des décalages axiaux dx, radiaux dT, et angulaires $\alpha$ relativement importants.

**Revendications**

1. Joint d'étanchéité entre deux carters (1, 2 ; 14, 15 ; 28, 29) reliés par deux orifices (7, 8 ; 9, 11 ; 31, 32) susceptibles d'être décalés axialement et/ou radialement, caractérisé en ce qu'il comprend deux armatures (18, 19 ; 33, 37) dont la première est pourvue d'une garniture (21, 34) en matière élastique, destiné à venir en compression axiale sur l'un des carters afin d'assurer l'étanchéité dans le sens axial, tandis que la seconde armature (19, 37) est munie d'une garniture (22, 36) en matière élastique destinée à venir en appui sur une surface du second carter (14, 29) et travaillant en compression radiale, et en ce que les deux armatures (18, 19 ; 33, 37) sont solidarisées ensemble par une jonction élastique (24, 35) assurant l'étanchéité entre les armatures, travaillant en compression radiale et/ou en cisaillement axial.

2. Joint selon la revendication 1, caractérisé en ce que la première armature (18) est constituée par une cuvette dont le fond est percé d'une ouverture (25) sensiblement coaxiale aux deux orifices (16, 17) des carters (18, 19) et muni d'une première garniture (21) surmoulée sur ladite armature (18), et la seconde armature (19) est formée d'une bague dans laquelle la cuvette (18) est engagée et qui est solidarisée avec celle-ci par un bourrelet annulaire élastique (24) autorisant un débattement dans toutes les directions entre la cuvette (18) et la bague (19), cette dernière étant munie d'une seconde garniture surmoulée (22).

3. Joint selon l'une des revendications 1 et 2, caractérisé en ce que les deux garnitures (21, 22) sont du type à lèvre.

4. Joint selon la revendication 1, caractérisé en ce que la première armature (33) porte une garniture (34) travaillant également en compression radiale et réalisée de préférence d'une seule pièce avec la jonction élastique (35) et la seconde garniture (36), entre lesquelles la seconde armature (37) est noyée.

**Claims**

1. Sealing joint between two housings (1, 2 ; 14, 15 ; 28, 29) connected by two orifices (7, 8 ; 9, 11 ; 31, 32) capable of being offset axially and/or radially, characterized in that it comprises two stays (18, 19 ; 33, 37), the first of which is provided with a packing means (21, 34) made of elastic material, intended to come up against one of the housings under axial compression, to provide a seal in the axial direction, whilst the second stay (19, 37) is equipped with a packing means (22, 36) made of elastic material, intended to bear on a surface of the second housing (14, 29) and working under radial compression, and in that the two stays (18, 19 ; 33, 37) are joined to one another by means of an elastic joint (24, 35) providing a seal between the stays and working under radial compression and/or axial shearing.

2. Joint according to Claim 1, characterized in that the first stay (18) consists of a bowl, the bottom of which is perforated with an opening (25) substantially coaxial relative to the two orifices (16, 17) of the housings (18, 19) and is equipped with a first packing means (21) moulded on the said stay (18), and the second stay (19) is formed by a ring, in which the bowl (18) is engaged and which is joined to the latter by means of an elastic annular bead (24) allowing movement in all directions between the bowl (18) and the ring (19), the latter being equipped with a second packing means (22) moulded on.

3. Joint according to one of Claims 1 and 2, characterized in that the two packing means (21, 22) are of the lip type.

4. Joint according to Claim 1, characterized in that the first stay (33) carries a packing means (34) likewise working under radial compression and preferably made in one single piece with the elastic joint (35) and the second packing means (36), between which the second stay (37) is embedded.

## Patentansprüche

1. Dichtungskupplung zwischen zwei Gehäusen (1, 2 ; 14, 15 ; 28, 29), die über zwei Öffnungen (7, 8 ; 9, 11 ; 31, 32) miteinander verbunden sind, die sich axial oder radial gegeneinander bewegen können, dadurch gekennzeichnet, daß sie zwei Armierungsteile (18, 19 ; 33, 17) aufweist, von denen das erste (18 ; 33) mit einem mit axialer Kompression arbeitenden Dichtungselement (21 ; 34) aus elastischem Material versehen ist, das zur Anlage an einem der Gehäuse bestimmt ist, um die Dichtigkeit in axialer Richtung zu gewährleisten, während das zweite (19 ; 37) mit einem mit radialer Kompression arbeitenden Dichtungselement (22 ; 36) aus elastischem Material versehen ist, das zur Anlage an einer Fläche des zweiten Gehäuses (14 ; 29) bestimmt ist, und daß die beiden Armierungsteile (18, 19 ; 33, 37) über eine elastische Kupplung (24 ; 35) fest miteinander verbunden sind, die die Dichtigkeit zwischen ihnen gewährleistet und mit radialer Kompression und/oder axialer Scherung arbeitet.

2. Dichtungskupplung nach Anspruch 1, dadurch gekennzeichnet, daß das erste Armierungsteil (18) von einer Schale gebildet ist, deren Boden eine zu den beiden Öffnungen (16, 17) der beiden Gehäuse (18, 19) annähernd koaxiale Durchbrechung (25) aufweist und mit einem Dichtungselement (21) versehen ist, das durch Anspritzen mit dem ersten Armierungsteil (18) verbunden ist, daß das zweite Armierungsteil (19) von einem Ring gebildet ist, in den die Schale (18) eingreift und der mit dieser durch einen ringförmigen elastischen Reifen (24) fest verbunden ist, der eine allseitige Bewegung zwischen der Schale (18) und dem Ring (19) erlaubt, und daß der Ring (19) mit einem zweiten Dichtungselement (22) versehen ist, das durch Anspritzen mit ihm verbunden ist.

3. Dichtungskupplung nach einem der Ansprüche 1 und 2, dadurch gekennzeichnet, daß die beiden Dichtungselemente (21, 22) Lippendichtungen sind.

4. Dichtungskupplung nach Anspruch 1, dadurch gekennzeichnet, daß das erste Armierungsteil (33) ein ebenfalls mit radialer Kompression arbeitetendes Dichtungselement (34) trägt, das vorzugsweise einstückig mit der elastischen Kupplung (35) und dem zweiten Dichtungselement (36) ausgebildet ist, und daß das zweite Armierungsteil (36) zwischen der elastischen Kupplung und dem zweiten Dichtungselement eingebettet ist.

FIG.1

FIG.2

FIG.3